# FASCICULE DE BREVET EUROPEEN

(11) **EP 3 601 758 B1**
(45) Date de publication et mention de la délivrance du brevet: **04.08.2021**
(21) Numéro de dépôt: 18713619.7
(22) Date de dépôt: 22.03.2018
(51) Int. Cl.: F01N 3/20, F01N 13/00, F01N 3/28, B63B 35/44, B63H 21/32

(54) **PLATEFORME NAVALE ÉQUIPÉE DE MOYENS DE MOTORISATION DIESEL**
MARINE PLATTFORM MIT DIESELANTRIEBSMITTELN
NAVAL PLATFORM EQUIPPED WITH DIESEL PROPULSION MEANS

(30) Priorité: 22.03.2017 FR 1700297
(43) Date de publication de la demande: 05.02.2020
(73) Titulaire: Naval Group, 75015 Paris (FR)
(72) Inventeur: BERG, Pierre, 44620 La Montagne (FR)
(74) Mandataire: Lavoix
(86) Numéro de dépôt international: PCT/EP2018/057271
(87) Numéro de publication internationale: WO 2018/172449

(56) Documents cités:
- EP-A1- 1 400 665
- EP-A1- 3 121 401
- JP-A- H0 988 568
- US-A1- 2008 236 913
- US-A1- 2010 077 735
- US-B1- 6 370 872

## Description

La présente invention concerne une plateforme navale.

Plus particulièrement, l'invention se rapporte à une plateforme navale équipée de moyens de motorisation Diesel.

Les plateformes navales, et en particulier les plateformes civiles mises sur cale après janvier 2016, devront respecter la norme IMO-TIER 3.

Celle-ci est particulièrement contraignante notamment dans les zones NECA (pour « NOx Emission Controled Area ») pour les émissions de NOx.

Les solutions développées actuellement pour traiter ces problèmes, par les motoristes, consistent à traiter les gaz d'échappement par un système de réacteur SCR (pour « Selective Catalytic Réduction »).

Or, ces systèmes de post-traitement des gaz sont très volumineux et particulièrement difficiles à emménager à bord.

Ces systèmes ne sont par ailleurs utilisés que dans les zones NECA mentionnées précédemment.

Afin de diminuer la taille du système de post-traitement des gaz, il est possible de n'utiliser ce système de réacteur ou de traitement de façon générale, que jusqu'à une certaine vitesse de la plateforme.

Le débit des gaz d'échappement des moyens de motorisation est alors réduit et la taille des moyens de traitement également.

Il est par contre nécessaire de prévoir des moyens de court-circuitage ou de by-pass des moyens de traitement, pour les utilisations de la propulsion à des allures supérieures.

Ainsi la tendance actuelle consiste à utiliser des moyens de traitement des gaz avec des moyens de by-pass ou de court-circuitage pour les fonctionnements à forte charge.

Le document EP3121401 décrit une solution de purification pour un navire.

Mais ces solutions présentent toujours un certain nombre d'inconvénients, notamment en raison de leur encombrement qui reste conséquent et donc des difficultés d'emménagement de ceux-ci à bord, tout en se traduisant par des limitations du volume des moyens de traitement et un coût relativement élevé.

Le but de l'invention est donc de résoudre ces problèmes.

A cet effet l'invention a pour objet une plateforme navale équipée de moyens de motorisation Diesel, dont la sortie d'échappement est associée à une ligne d'échappement comportant des moyens de traitement de gaz, des moyens de court-circuitage de ceux-ci et des moyens formant silencieux, caractérisée en ce qu'au moins les moyens de traitement des gaz et les moyens de court-circuitage sont disposés dans une enveloppe commune comportant au moins deux veines en parallèle, de passage de gaz, dans l'une desquelles sont placés les moyens de traitement des gaz et dont l'autre est associée aux moyens de court-circuitage, pour, lorsque ces moyens de court-circuitage sont fermés, forcer les gaz d'échappement à traverser les moyens de traitement des gaz et, lorsque ces moyens de court-circuitage sont ouverts, permettre à ces gaz de court-circuiter ces moyens de traitement et en ce que les deux veines de passage de gaz, sont ménagées l'une autour de l'autre et définissent une veine interne tubulaire et une veine externe annulaire et en ce que les moyens formant silencieux sont également disposés dans la même enveloppe que les moyens de traitement des gaz et les moyens de court-circuitage.

Suivant d'autres caractéristiques de la plateforme selon l'invention, prises seules ou en combinaison :
- les moyens de traitement des gaz sont placés dans la veine externe, tandis que les moyens de court-circuitage sont associés à la veine interne ;
- des moyens formant déflecteur sont associés à ces veines pour guider les gaz ;
- l'enveloppe est cylindrique ;
- l'enveloppe est parallélépipédique.

L'invention sera mieux comprise à la lecture de la description qui va suivre, donnée uniquement à titre d'exemple et faite en se référant aux dessins annexés, sur lesquels :
- la figure 1 représente un schéma synoptique illustrant la structure et le fonctionnement d'une ligne d'échappement entrant dans la constitution d'une plateforme de l'état de la technique, et
- la figure 2 représente un schéma synoptique illustrant la structure et le fonctionnement d'un exemple d'une ligne d'échappement entrant dans la constitution d'une plateforme selon l'invention.

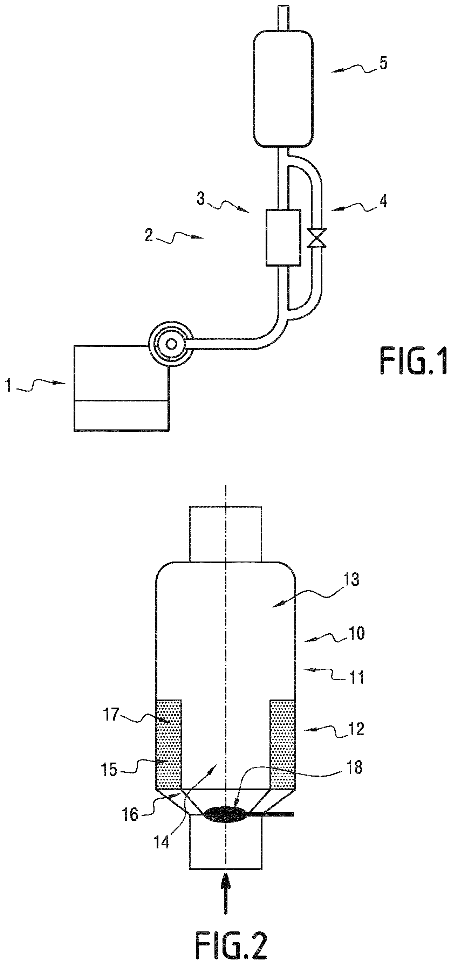

On a en effet illustré sur la figure 1, de façon schématique, des moyens de motorisation, tels que par exemple un moteur Diesel, désignés par la référence générale 1, d'une plateforme navale telle qu'un bâtiment de surface.

La sortie des gaz d'échappement des moyens de motorisation 1, est alors associée à une ligne d'échappement de gaz désignée par la référence générale 2 sur cette figure 1.

Cette ligne 2 comporte des moyens de traitement des gaz d'échappement, désignés par la référence générale 3, et des moyens de by-pass ou de court-circuitage de ceux-ci, désignés par la référence générale 4.

Ces moyens de by-pass ou de court-circuitage 4, sont constitués par exemple par une vanne commandée de by-pass, placée en parallèle des moyens de traitement des gaz 3.

Enfin la ligne d'échappement comporte également des moyens formant silencieux désignés par la référence générale 5.

Comme cela a été indiqué précédemment, lorsqu'un traitement des gaz est requis, la vanne de by-pass 4 est fermée, forçant ainsi les gaz d'échappement du moteur, à passer à travers les moyens de traitement 3, avant de traverser les moyens formant silencieux 5.

Lorsque le traitement des gaz n'est pas requis, la vanne de by-pass 4 est ouverte, autorisant ainsi les gaz d'échappement en sortie du moteur, à court-circuiter ces moyens de traitement 3, pour passer directement dans les moyens formant silencieux 5.

Comme cela a été indiqué précédemment, ces structures de lignes d'échappement présentent un certain nombre d'inconvénients notamment d'encombrement, de difficultés d'emménagement à bord et de coût.

Pour résoudre ces problèmes et comme cela est illustré sur la figure 2, la présente invention propose une nouvelle structure de cette partie de ligne d'échappement.

Un exemple de réalisation d'une telle ligne est illustré sur la figure 2.

En fait et comme cela est illustré sur cette figure 2, les moyens de traitement des gaz et les moyens formant silencieux peuvent être disposés dans une enveloppe commune.

Sur cette figure 2, cette enveloppe commune est désignée par la référence générale 10 et l'on reconnaît dans celle-ci, deux parties respectivement 11 et 12.

Les moyens formant silencieux sont désignés par la référence générale 13 sur cette figure et sont placés dans l'une de ses parties de l'enveloppe, à savoir par exemple la partie 11.

L'autre partie de cette enveloppe, c'est-à-dire la partie 12, comporte au moins deux veines en parallèle de passage de gaz.

Ces veines sont désignées par les références générales 14 et 15 sur cette figure 2, et sont associées à des moyens formant déflecteur de gaz désignés par la référence générale 16 sur cette figure.

Dans l'exemple de réalisation illustré sur cette figure, l'enveloppe 10 est cylindrique.

Il va de soi bien entendu, que d'autres modes de réalisation et d'autres formes d'enveloppe peuvent être envisagés, comme par exemple une forme parallélépipédique ou autre.

En fait, les moyens de traitement des gaz d'échappement sont placés dans l'une de ces veines et l'autre veine est associée aux moyens de court-circuitage de ces moyens de traitement.

Ainsi par exemple sur cette figure 2, des moyens de traitement sont désignés par la référence 17, et sont placés dans la veine 15, tandis que la veine 14 est associée à des moyens de court-circuitage qui sont désignés par la référence générale 18 sur cette figure.

Dans l'exemple décrit sur cette figure, les deux veines de passage de gaz sont ménagées l'une autour de l'autre et définissent ainsi une veine interne tubulaire 14 et une veine externe annulaire 15.

Les moyens de traitement des gaz d'échappement 17 sont alors placés par exemple dans la veine externe 15, tandis que les moyens de court-circuitage 18 sont associés à la veine interne 14.

Bien entendu d'autres dispositions et d'autres modes de réalisation peuvent être envisagés.

On conçoit alors qu'en cours de fonctionnement de la ligne d'échappement, lorsque le traitement des gaz est requis, les moyens de court-circuitage 18 sont fermés, et les gaz d'échappement en sortie du moteur sont alors forcés à passer dans la veine externe 15 et à traverser les moyens de traitement de gaz 17 avant d'arriver aux moyens formant silencieux 13.

Par contre lorsque le traitement des gaz n'est pas requis, les moyens de court-circuitage 18 sont ouverts.

Ceci permet alors aux gaz d'échappement en sortie du moteur, de traverser directement la veine interne 14 et de court-circuiter les moyens de traitement des gaz 17, afin d'arriver directement aux moyens formant silencieux 13.

On conçoit alors qu'une telle structure présente un certain nombre d'avantages notamment au niveau de son encombrement réduit et donc des facilités d'emménagement de celle-ci à bord.

Bien entendu d'autres modes de réalisation encore peuvent être envisagés.

Ainsi, dans le mode de réalisation décrit sur la figure 2, les moyens formant silencieux 13 sont disposés dans la même enveloppe 10 que les moyens de traitement des gaz 17 et les moyens de court-circuitage 18.

Selon une autre disposition non représentative de l'invention, on peut envisager que les moyens formant silencieux soient disposés dans une autre enveloppe distincte et séparée de celle dans laquelle sont disposés les moyens de traitement des gaz et les moyens de court-circuitage.

Ainsi par exemple, l'enveloppe dans laquelle sont disposés les moyens de traitement des gaz et les moyens de court-circuitage peut être localisée dans la salle des machines de la plateforme et l'autre enveloppe à un autre endroit de cette salle ou ailleurs dans la plateforme.

Ceci peut être intéressant par exemple en cas de difficultés d'emménagement liées à la place disponible.

## Revendications

1. Plateforme navale équipée de moyens de motorisation Diesel (1), dont la sortie d'échappement est associée à une ligne d'échappement comportant des moyens de traitement de gaz (17), des moyens de court-circuitage (18) de ceux-ci et des moyens formant silencieux (13), **caractérisée en ce qu'**au moins les moyens de traitement des gaz et les moyens de court-circuitage sont disposés dans une enveloppe commune (10) comportant au moins deux veines en parallèle, de passage de gaz (14, 15), dans l'une (15) desquelles sont placés les moyens de traitement des gaz (17) et dont l'autre (14) est associée aux moyens de court-circuitage (18), pour, lorsque ces moyens de court-circuitage (18) sont fermés, forcer les gaz d'échappement à traverser les moyens de traitement des gaz (17) et, lorsque ces moyens de court-circuitage (18) sont ouverts, permettre à ces gaz de court-circuiter ces moyens de traitement et **en ce que** les deux veines de passage de gaz, sont ménagées l'une (15) autour de l'autre (14) et définissent une veine interne tubulaire (14) et une veine externe annulaire (15) et **en ce que** les moyens formant silencieux (13) sont également disposés dans la même enveloppe (10) que les moyens de traitement des gaz (17) et les moyens de court-circuitage (18).

2. Plateforme navale équipée de moyens de motorisation selon la revendication 1, **caractérisée en ce que** les moyens de traitement des gaz (17) sont placés dans la veine externe (15), tandis que les moyens de court-circuitage (18) sont associés à la veine interne (14).

3. Plateforme navale équipée de moyens de motorisation selon la revendication 2, **caractérisée en ce que** des moyens formant déflecteur (16) sont associés à ces veines pour guider les gaz.

4. Plateforme navale équipée de moyens de motorisation selon l'une quelconque des revendications précédentes, **caractérisée en ce que** l'enveloppe (10) est cylindrique.

5. Plateforme navale équipée de moyens de motorisation selon l'une quelconque des revendications 1 à 3, **caractérisée en ce que** l'enveloppe est parallélépipédique.

## Patentansprüche

1. Marineplattform, die mit Dieselmotormitteln (1) ausgestattet ist, deren Auspuff einer Auspuffleitung zugeordnet ist, die Gasbehandlungsmittel (17), Mittel (18) zum Kurzschließen dieser letzteren und einen Schalldämpfer (13) bildende Mittel aufweist, **dadurch gekennzeichnet, dass** zumindest die Gasbehandlungsmittel und die Kurzschlussmittel in einem gemeinsamen Gehäuse (10) angeordnet sind, das mindestens zwei parallele Kanäle (14, 15) zum Durchführen von Gas aufweist, wobei in einem (15) derselben das Gasbehandlungsmittel (17) angeordnet ist und das andere (14) den Kurzschlussmitteln (18) zugeordnet ist, um, wenn diese Kurzschlussmittel (18) geschlossen sind, die Abgase zu zwingen, das Gasbehandlungsmittel (17) zu durchqueren, und, wenn die Kurzschlussmittel (18) offen sind, den Gasen zu ermöglichen, diese Behandlungsmittel zu umgehen, und dass die beiden Kanäle zum Durchführen von Gas einer (15) um den anderen (14) herum angeordnet sind und einen rohrförmigen Innenkanal (14) und einen ringförmigen Außenkanal (15) definieren, und dass die einen Schalldämpfer (13) bildenden Mittel ebenfalls in demselben Gehäuse (10) wie die Gasbehandlungsmittel (17) und die Kurzschlussmittel (18) angeordnet sind.

2. Marineplattform, die mit Motormitteln ausgestattet ist, nach Anspruch 1, **dadurch gekennzeichnet, dass** die Gasbehandlungsmittel (17) in dem Außenkanal (15) angeordnet sind, während die Kurzschlussmittel (18) dem Innenkanal (14) zugeordnet sind.

3. Marineplattform, die mit Motormitteln ausgestattet ist, nach Anspruch 2, **dadurch gekennzeichnet, dass** diesen Kanälen ein Leitblech bildende Mittel (16) zur Führung der Gase zugeordnet sind.

4. Marineplattform, die mit Motormitteln ausgestattet ist, nach einem beliebigen der vorhergehenden Ansprüche, **dadurch gekennzeichnet, dass** Gehäuse (10) zylinderförmig ist.

5. Marineplattform, die mit Motormitteln ausgestattet ist, nach einem beliebigen der Ansprüche 1 bis 3, **dadurch gekennzeichnet, dass** das Gehäuse quaderförmig ist.

## Claims

1. Naval platform equipped with diesel propulsion means (1), the exhaust outlet of which is associated with an exhaust line comprising gas treatment means (17), bypass means (18) for bypassing the gas treatment means, and means forming a silencer (13), **characterised in that** at least the gas treatment means and the bypass means are arranged in a common casing (10) comprising at least two parallel channels for the passage of gas (14, 15), in one (15) of which there are situated the gas treatment means (17) and the other (14) of which is associated with the bypass means (18), in order, when the bypass means (18) are closed, to force the exhaust gases to pass through the gas treatment means (17) and, when the bypass means (18) are open, to allow the gases to bypass the treatment means, and **in that** the two channels for the passage of gas are formed one (15) around the other (14) and define a tubular internal channel (14) and an annular external channel (15), and **in that** the means forming a silencer (13) are also arranged in the same casing (10) as the gas treatment means (17) and the bypass means (18).

2. Naval platform equipped with propulsion means according to claim 1, **characterised in that** the gas treatment means (17) are situated in the external channel (15) while the bypass means (18) are associated with the internal channel (14).

3. Naval platform equipped with propulsion means according to claim 2, **characterised in that** means forming a deflector (16) are associated with the channels in order to guide the gases.

4. Naval platform equipped with propulsion means according to any one of the preceding claims, **characterised in that** the casing (10) is cylindrical.

5. Naval platform equipped with propulsion means according to any one of claims 1 to 3, **characterised in that** the casing is parallelepipedal.
